# EUROPEAN PATENT APPLICATION

(11) **EP 3 273 738 A1**
(43) Date of publication of application: **24.01.2018**
(21) Application number: 16768003.2
(22) Date of filing: 15.03.2016
(51) Int. Cl.: H04W 72/04, H04W 72/08, H04W 72/10, H04W 92/12

(54) **NETWORK APPARATUS, BASE STATION, COMMUNICATION METHOD, WIRELESS RESOURCE CONTROL METHOD AND NON-TRANSITORY COMPUTER READABLE MEDIUM**

(30) Priority: 20.03.2015 JP 2015058151
(71) Applicant: NEC Corporation, Tokyo 108-8001 (JP)
(72) Inventor: FUKUI, Keiji, Tokyo 108-8001 (JP); SUZUKI, Naoaki, Tokyo 108-8001 (JP); WATANABE, Kazuo, Tokyo 108-8001 (JP); TAMURA, Toshiyuki, Tokyo 108-8001 (JP)
(74) Representative: MacDougall, Alan John Shaw
(86) International application number: PCT/JP2016/001486
(87) International publication number: WO 2016/152096

(57) **Abstract**

An object is to provide a network apparatus that can ensure allocable radio resources when the number of communication terminal performing carrier aggregation increases. A network apparatus (10) according to the present disclosure manages a base station (30) that allocates radio resources to a communication terminal (20) and performs communication. The network apparatus (10) includes a communication unit (11) for transmitting, to the base station (30), an instruction message when allocable radio resources are insufficient in the base station (30) or the allocable radio resources are expected to become insufficient in the base station (30). This instruction message instructs the base station (30) to stop using one (or some) of frequency bands for the communication terminal (20) performing communication using a plurality of frequency bands simultaneously.

## Description

### Technical Field

The present disclosure relates to a network apparatus, a base station, a communication method, a radio resource control method, and a program. In particular, the present disclosure relates to a network apparatus, a base station, a communication method, a radio resource control method, and a program for controlling an operation relating to carrier aggregation.

### Background Art

Recently, in order to realize high-speed wireless communication, carrier aggregation that offers a wide band by using a plurality of frequency bands is used. For example, a communication terminal capable of performing carrier aggregation may perform wireless communication using a frequency band of a 10 MHz width in an 800 MHz band and a frequency band of a 10 MHz width in a 2 GHz band, which make a frequency band of a 20 MHz width in total.

Non Patent Literature 1 describes a flow of processing when carrier aggregation is applied. To be more specific, Non Patent Literature 1 describes a process in which an evolved NodeB (eNB) establishes an RRC (Radio Resource Control) Connection to a UE (User Equipment) when it communicates with a UE capable of performing carrier aggregation. The eNB is defined by 3GPP (3rd Generation Partnership Project) as a base station that can use LTE (Long Term Evolution) as a wireless communication scheme. The term UE is used by 3GPP as a generic term for communication terminals.

### Citation List

### Non Patent Literature

Non Patent Literature 1: 3GPP TS 36.331 V12.4.1 (2014-12) 5.3.5 RRC connection reconfiguration

### Summary of Invention

### Technical Problem

However, when the communication terminal performs carrier aggregation, it uses radio resources in a plurality of frequency bands. For example, when the communication terminal performs carrier aggregation using an 800 MHz band and a 2 GHz band, a base station needs to allocate radio resources to the communication terminal in the 800 MHz band and the 2 GHz band. Therefore, when the number of communication terminals performing carrier aggregation increases, there is a problem that the radio resources will become insufficient and the number of communication terminals that can perform wireless communication at the same time decreases as compared to when carrier aggregation is not applied.

An object of the present disclosure is to provide a network apparatus, a base station, a communication method, a radio resource control method, and a program capable of ensuring allocable radio resources when the number of communication terminals performing carrier aggregation increases.

### Solution to Problem

A first example aspect of the present disclosure is a network apparatus for managing a base station that allocates radio resources to a communication terminal and performs communication. The network apparatus includes a communication unit for transmitting, to the base station, an instruction message when allocable radio resources are insufficient in the base station or the allocable radio resources are expected to become insufficient in the base station, the instruction message instructing the base station to stop using one (or some) of frequency bands for the communication terminal performing communication using a plurality of frequency bands simultaneously.

A second example aspect of the present disclosure is a base station including: communication unit for receiving, from a network apparatus, an instruction message when allocable radio resources are insufficient or the allocable radio resources are expected to become insufficient, the instruction message indicating a stop of using one (or some) of frequency bands for a communication terminal performing communication using a plurality of frequency bands simultaneously; an evaluation unit configured to evaluate as to whether or not the allocable radio resources are insufficient or whether or not the allocable radio resources are expected to become insufficient; and a control unit for stopping, when the evaluation unit evaluates that the allocable radio resources are insufficient or the allocable radio resources are expected to become insufficient, the one (or some) of the frequency bands for the communication terminal performing the communication using the plurality of frequency bands simultaneously.

A third example aspect of the present disclosure is a communication method performed by a network apparatus for managing a base station that allocates radio resources to a communication terminal and performs communication. The communication method includes transmitting, to the base station, an instruction message when allocable radio resources are insufficient in the base station or the allocable radio resources are expected to become insufficient in the base station, the instruction message instructing the base station to stop using one (or some) of frequency bands for a communication terminal performing communication using a plurality of frequency bands simultaneously.

A fourth example aspect of the present disclosure is a radio resource control method including: receiving, from a network apparatus, an instruction message when allocable radio resources are insufficient or the allocable radio resources are expected to become insufficient, the instruction message indicating a stop of using one (or some) of frequency bands for a communication terminal performing communication using a plurality of frequency bands simultaneously; evaluating as to whether or not the allocable radio resources are insufficient or whether or not the allocable radio resources are expected to become insufficient; and stopping, when the evaluation unit evaluates that the allocable radio resources are insufficient or the allocable radio resources are expected to become insufficient, the one (or some) of the frequency bands for the communication terminal performing the communication using the plurality of frequency bands simultaneously.

A fifth example aspect of the present disclosure is a program for causing a computer for managing a base station that allocates radio resources to a communication terminal and performs communication to execute a program, the program comprising transmitting, to the base station, an instruction message when allocable radio resources are insufficient in the base station or the allocable radio resources are expected to become insufficient in the base station, the instruction message instructing the base station to stop using one (or some) of frequency bands for a communication terminal performing communication using a plurality of frequency bands simultaneously.

### Advantageous Effects of Invention

According to the present disclosure, it is possible to provide a network apparatus, a base station, a communication method, a radio resource control method, and a program capable of ensuring allocable radio resources when the number of communication terminals performing carrier aggregation increases.

### Brief Description of Drawings

Fig. 1 is a configuration diagram of a communication system according to a first embodiment;
Fig. 2 is a configuration diagram of a communication system according to a second embodiment;
Fig. 3 is a configuration diagram of an MME according to the second embodiment;
Fig. 4 is a configuration diagram of an eNB according to the second embodiment;
Fig. 5 is a diagram showing a flow of Attach processing according to the second embodiment;
Fig. 6 is a diagram showing a flow of processing for stopping use of one of frequency bands for a UE performing carrier aggregation according to the second embodiment; and
Fig. 7 is a configuration diagram of a communication system according to a third embodiment.

### Description of Embodiments

### First Embodiment

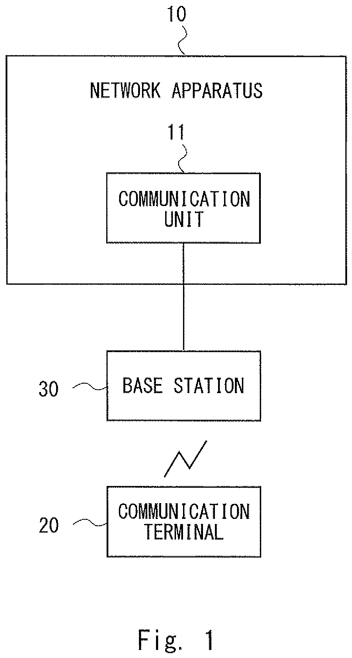

Hereinafter, embodiments of the present disclosure will be described with reference to the drawings. Firstly, a configuration example of a communication system according to a first embodiment of the present disclosure will be described with reference to Fig. 1. The communication system of Fig. 1 includes a network apparatus 10, a communication terminal 20, and a base station 30. The network apparatus 10, the communication terminal 20, and the base station 30 may each be a computer apparatus that operates by a processor executing a program stored in a memory.

The base station 30 allocates radio resources to the communication terminal 20 and performs communication. The communication terminal 20 may be, for example, a mobile phone terminal, a smartphone, a personal computer having a communication function, or the like. The radio resources may be, for example, radio channels that can be simultaneously used in a certain frequency band, allocable frequency bands, transmission power at the time of signal transmission, and the like.

The base station 30 performs wireless communication with the communication terminal 20. Further, the base station 30 performs wired communication or wireless communication with the network apparatus 10.

Hereinafter, a configuration example of the network apparatus 10 will be described. The network apparatus 10 may be, for example, a node apparatus defined by 3GPP. The network apparatus 10 includes a communication unit 11. The communication unit 11 may be software or a module(s), processing thereof being executed by a processor executing a program stored in a memory. Alternatively, the communication unit 11 may be composed of a circuit or the like.

When the allocable radio resources are insufficient in the base station 30 or when the allocable radio resources are expected to become insufficient in the base station 30, the communication unit 11 transmits an instruction message instructing the base station 30 to stop using one (or some) of the frequency bands for the communication terminal 20 that is performing communication using a plurality of frequency bands simultaneously.

A case when the allocable radio resources are expected to become insufficient may be, for example, a case when radio resources are not insufficient at the present time but the radio resources are expected to become insufficient after a certain period of time due to a sudden increase in the radio resources to be allocated or the like.

The communication terminal 20 performing the communication using the plurality of frequency bands simultaneously may be, for example, the communication terminal 20 performing the carrier aggregation. The communication terminal 20 may perform communication with the base station 30 using a plurality of frequency bands simultaneously or may perform communication with a plurality of base stations using a plurality of frequency bands simultaneously. A case when the use of one (or some) of the frequency bands for the communication terminal is stopped may be, for example, the following one. Namely, when the communication terminal 20 is communicating with the base station 30 using the 800 MHz band and the 2 GHz band simultaneously, the use of the 2 GHz band is stopped. Alternatively, a case when the use of one (or some) of the frequency bands for the communication terminal is stopped may be the following one. Namely, when the communication terminal 20 is communicating with the base station 30 using the 800 MHz band and communicating with another base station different from the base station 30 using the 2 GHz band, the base station 30 stops using the 800 MHz band.

The communication unit 11 transmits the instruction message to the base station 30 before the allocable radio resources become insufficient in the base station 30 or before the allocable radio resources are expected to become insufficient in the base station 30.

As described above, by using the communication system of Fig. 1, the network apparatus 10 can notify the base station 30 of an instruction related to an operation performed during the communication between the base station 30 and the communication terminal 20 using carrier aggregation. In this way, the base station 30 can dynamically stop the use of one (or some) of the frequency bands used in carrier aggregation according to the radio resources of the base station 30 even during the communication with the communication terminal 20 using carrier aggregation.

Another effect achieved by the base station 30 dynamically stopping the use of one (or some) of the frequency bands used in carrier aggregation according to the radio resources will be described below.

When the allocable radio resources are insufficient or when there is no allocable radio resources in the base station 30, the base station 30 needs to reject a connection request from a communication terminal(s) other than the communication terminal currently connected thereto. Commonly, when the base station to which the communication terminal is connected is changed by handing the communication terminal over or when power of the communication terminal is turned on, the communication terminal attempts a connection to a base station with the best radio environment or the best wireless communication environment. However, if the connection is rejected by the base station to which the communication terminal attempts a connection, the communication terminal attempts a connection to a base station with the second best radio environment. In this case, as the radio wave environment of the base station to which the communication terminal attempted a connection for the second time is inferior to the base station to which the communication terminal attempted a connection for the first time, there is a concern over deterioration of communication quality between the base station and the communication terminal.

On the other hand, when the allocable radio resources are insufficient and the like, the base station 30 can stop the communication terminal that is using more radio resources by performing carrier aggregation than other communication terminals that are not performing carrier aggregation do from using one (or some) of the frequency bands. By doing so, the base station 30 can ensure or increase the allocable radio resources. Accordingly, the base station 30 can increase the number of connectable communication terminals.

### Second Embodiment

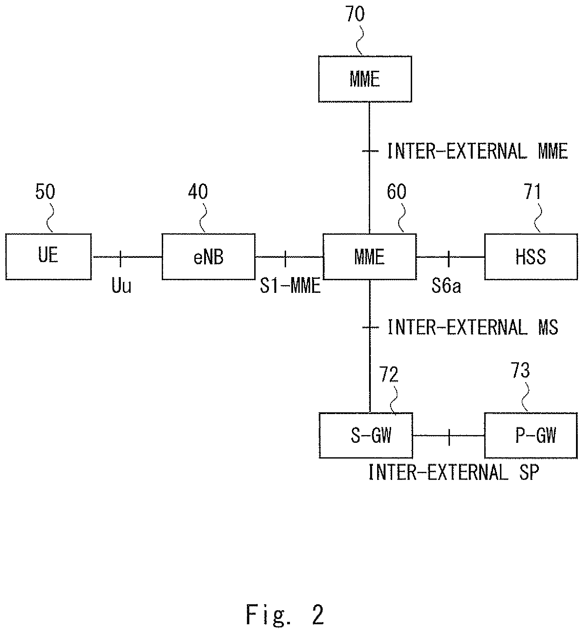

Hereinafter, a configuration example of a communication system according to a second embodiment of the present disclosure will be described with reference to Fig. 2. The communication system of Fig. 2 includes an eNB 40, a UE 50, an MME (Mobility Management Entity) 60, an MME 70, an HSS (Home Subscriber Server) 71, an S-GW (Serving-Gateway) 72, and a P-GW (Packet Data Network Gateway) 73.

The UE 50 corresponds to the communication terminal 20 of Fig. 1. The eNB 40 corresponds to the base station 30 of Fig. 1. The MME 60 and the MME 70 correspond to the network apparatus 10 of Fig. 1.

The eNB 40 is connected to the UE 50 via a Uu interface. The UE 50 performs carrier aggregation, for example, by simultaneously using a plurality of frequency bands that are communicable in the eNB 40.

The MME 60 accommodates the eNB 40 via an S1-MME interface. The MME 70 may accommodate another eNB different from the eNB 40. The MMEs 60 and 70 perform mobility management, authentication, setting processing of user data transfer paths for UEs, and the like. The MME 60 is connected to the MME 70 via an inter-external MME interface.

The HSS 71 manages the subscriber information on the UE 50. The subscriber information includes, for example, static information such as contract information between the UE 50 and a mobile communication carrier and dynamic information such as position information of the UE 50. The static information is not frequently changed, while the dynamic information is frequently changed compared with the static information. The HSS 71 transmits the subscriber information on the UE 50 to the MME 60 via an S6a interface, for example, when the MME 60 executes the authentication process on the UE 50.

The S-GW 72 sends user data. The S-GW 72 is connected to the MME 60 via an inter-external MS interface and transmits/receives control data to/from the MME 60. Like the S-GW 72, the P-GW 73 sends user data. The P-GW 73 further performs allocation of an IP address on the UE 50 and the like. The P-GW 73 is connected to the S-GW 72 via an inter-external SP interface and transmits/receives control data to/from the S-GW 72. The P-GW 73 may further be connected to an external network, the Internet, or the like (not shown) via another interface.

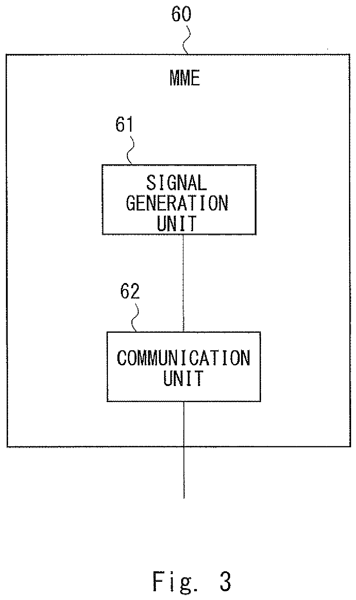

Hereinafter, a configuration example of the MME 60 according to the second embodiment of the present disclosure will be described with reference to Fig. 3. The MME 60 includes a signal generation unit 61 and a communication unit (transmission/reception unit) 62. The signal generation unit 61 and the communication unit 62 may each be software or a module(s), processing thereof being executed by a processor executing a program stored in a memory. The signal generation unit 61 and the communication unit 62 may each be composed of a circuit. In Fig. 3, description of a communication interface (or a communication unit) for communicating with a node apparatus other than the eNB 40 is omitted.

When the allocable radio resources are insufficient in the eNB 40 or when the allocable radio resources are expected to become insufficient in the eNB 40, the signal generation unit 61 generates an instruction message for instructing the eNB 40 to stop using one (or some) of the frequency bands for the UE 50 that is performing carrier aggregation.

In this case, it is assumed that the UE 50 performs carrier aggregation with the eNB 40 using a plurality of frequency bands. For example, it is assumed that the UE 50 performs wireless communication with the eNB 40 using a frequency band of a 10 MHz width in an 800 MHz band and a frequency band of a 10 MHz width in a 2 GHz band, which make a frequency band of a 20 MHz width in total.

For example, when the eNB 40 performs carrier aggregation with the UE 50, the eNB 40 establishes connections to the UE 50 in a primary cell and a secondary cell. For example, the primary cell may be a communication area using a frequency of the 800 MHz band, and the secondary cell may be a communication area using a frequency of the 2 GHz band.

The signal generation unit 61 may include information on the frequency band to be stopped in the instruction message. When the signal generation unit 61 does not include the information on the frequency band to be stopped in the instruction message, the eNB 40 may determine the frequency band to be stopped. For example, the eNB 40 may disconnect the connection in the secondary cell.

Further, the signal generation unit 61 may include determination reference information on the communication terminal, which is the communication terminal to stop using one (or some) of the frequency bands, in the instruction message. For example, a value of radio field strength or a value of radio signal strength may be set as the determination reference information. When the radio resources are insufficient, and the radio field strength of one (or some) of the frequency bands among the plurality of frequency bands used by the UE 50 is lower than the value set in the instruction message, the eNB 40 may stop using the frequency band(s) having the radio field strength lower than the value set in the instruction message.

Alternatively, the signal generation unit 61 may set a modulation scheme as the determination reference information. For example, if the radio resources are insufficient, and the modulation scheme used by one (or some) of frequency bands among the plurality of frequency bands used by the UE 50 provides a communication capacity smaller than that of the modulation scheme set in the instruction message, the eNB 40 may stop using the frequency band(s) that uses the modulation scheme providing a communication capacity smaller than that of the modulation scheme set in the instruction message.

Alternatively, the signal generation unit 61 may set information on a priority of the UE 50 as the determination reference information. For example, when the radio resources are insufficient, the eNB 40 may evaluate the information on the priority set for each UE that uses a plurality of frequency bands and sequentially causes the UEs to stop using one (or some) of the frequency bands in order of the priority set for each UE.

The communication unit 62 transmits the instruction message generated by the signal generation unit 61 to the eNB 40. For example, the communication unit 62 transmits the instruction message to the eNB 40 in Attach processing of the UE 50.

The communication unit 62 may obtain, from the HSS 71, information indicating whether or not the UE 50 corresponds to the UE that can stop using one (some) of frequency bands while the UE 50 is performing carrier aggregation. The communication unit 62 outputs the information output from the HSS 71 to the signal generation unit 61.

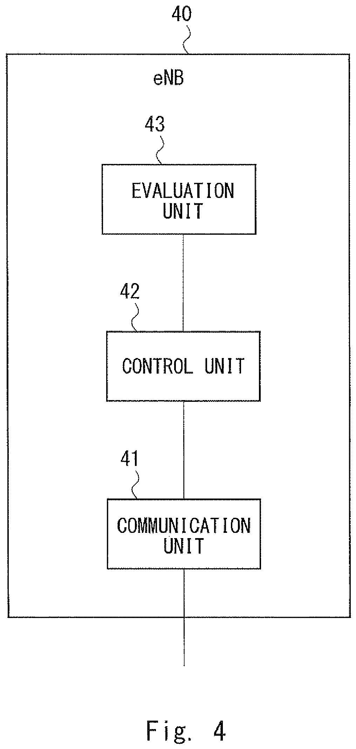

Hereinafter, a configuration example of the eNB 40 according to the second embodiment of the present disclosure will be described with reference to Fig. 4. The eNB 40 includes a communication unit (transmission/reception unit) 41, a control unit 42, and an evaluation unit 43. The communication unit 41, the control unit 42, and the evaluation unit 43 may each be software or a module(s), processing thereof being executed by a processor executing a program stored in a memory. The communication unit 41, the control unit 42, and the evaluation unit 43 may each be composed of a circuit. In Fig. 4, description of a communication interface (or a communication unit) for communicating with the UE 50 is omitted.

The communication unit 41 receives instruction information transmitted from the MME 60. The communication unit 41 outputs the received instruction information to the control unit 42.

The evaluation unit 43 evaluates as to whether or not the allocable radio resources are insufficient or whether or not the allocable radio resources are expected to become insufficient. For example, when the number of the allocable radio channels falls below a predetermined value, the evaluation unit 43 may evaluate that the allocable radio resources are insufficient. When the number of radio channels allocated within a predetermined period exceeds a predetermined value, the evaluation unit 43 may evaluate that the allocable radio resources are expected to become insufficient. In other words, when an amount of decrease in the number of the allocable radio channels exceeds a predetermined value, the evaluation unit 43 may evaluate that the allocable radio resources are expected to become insufficient. The evaluation unit 43 outputs an evaluation result to the control unit 42.

When the control unit 42 receives, from the evaluation unit 43, the evaluation result indicating that the allocable radio resources are insufficient or that the allocable radio resources are expected to become insufficient, the control unit 42 stops using one (or some) of the frequency bands for the UE 50 performing carrier aggregation.

Hereinafter, an evaluation process in the control unit 42 when there are a plurality of UEs performing carrier aggregation will be described. For example, when the determination reference information is not included in the instruction information transmitted from the MME 60, the control unit 42 may sequentially stop using one (or some) of the frequency bands for an arbitrary UE or in an order from a UE having the longest connection to the eNB 40. When the determination reference information is included in the instruction information transmitted from the MME 60, the control unit 42 may determine the UE that is to stop using one (or some) of the frequency bands and the frequency band(s) to be stopped from being used in accordance with the determination reference information.

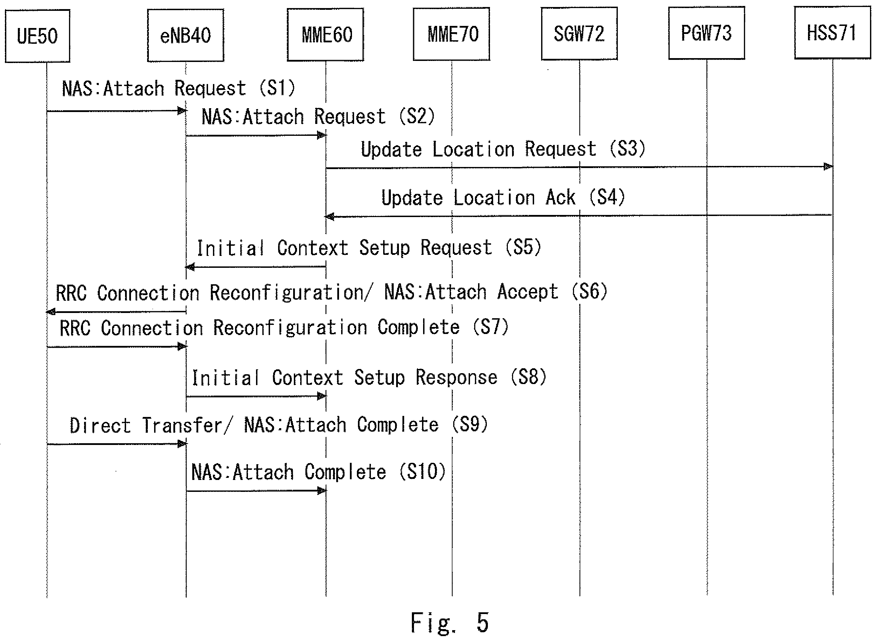

Hereinafter, a flow of the Attach processing according to the second embodiment of the present disclosure will be described with reference to Fig. 5. First, the UE 50 transmits a NAS:Attach Request message to the eNB 40 (S1). The NAS:Attach Request message is transmitted, for example, when the UE 50 transitions from a power-off state to a power-on state. The NAS:Attach Request message is used in the NAS (Non-Access Stratum) protocol defined between UEs and a core network apparatus. The core network apparatus may be, for example, an MME.

Next, the eNB 40 transfers the NAS:Attach Request message transmitted from the UE 50 to the MME 60 (S2). Next, when the MME 60 receives the NAS:Attach Request message transmitted from the eNB 40, it transmits an Update Location Request message to the HSS 71 (S3). The MME 60 transmits the Update Location Request message to the HSS 71 in order to obtain the subscriber information from the HSS 71. For example, the MME 60 sets an identifier for identifying the UE 50 in the Update Location Request message and transmits it to the HSS 71.

Next, the HSS 71 transmits an Update Location Ack message to the MME 60 as a response message to the Update Location Request message (S4). The HSS 71 transmits the Update Location Ack message in which the subscriber information on the UE 50 is set to the MME 60.

When, while the UE 50 is performing carrier aggregation, it is evaluated that the allocable radio resources are insufficient in the eNB 40 or when it is evaluated that the allocable radio resources are expected to become insufficient in the eNB 40, the HSS 71 sets information indicating a stop of using one (or some) of the frequency bands for the UE 50 in the Update Location Ack message.

When, while the UE 50 is performing carrier aggregation, it is evaluated that the allocable radio resources are insufficient in the eNB 40 or when it is evaluated that the allocable radio resources are expected to become insufficient in the eNB 40, the information indicating a stop of using one (or some) of the frequency bands for the UE 50 may be included in the subscriber information.

Next, the MME 60 transmits an Initial Context Setup Request message to the eNB 40 (S5). When, while the UE 50 is performing carrier aggregation, it is evaluated that the allocable radio resources are insufficient in the eNB 40 or when it is evaluated that the allocable radio resources are expected to become insufficient in the eNB 40, the MME 60 sets the information indicating a stop of using one (or some) of the frequency bands for the UE 50 in the Initial Context Setup Request message.

Further, when, while the UE 50 is performing carrier aggregation, it is evaluated that the allocable radio resources are insufficient in the eNB 40 or when it is evaluated that the allocable radio resources are expected to become insufficient in the eNB 40, the MME 60 may set information indicating a disconnection of a connection in the secondary cell in the Initial Context Setup Request. Moreover, when, while the UE 50 is performing carrier aggregation, it is evaluated that the allocable radio resources are insufficient in the eNB 40 or when it is evaluated that the allocable radio resources are expected to become insufficient in the eNB 40, the information indicating a disconnection of a connection in the secondary cell may be set in the Update Location Ack message transmitted by the HSS 71.

Next, the eNB 40 transmits an RRC Connection Reconfiguration/NAS:Attach Accept message to the UE 50 in order to establish an RRC Connection to the UE 50 (S6).

Next, the UE 50 transmits an RRC Connection Reconfiguration Complete message to the eNB 40 as a response message to the RRC Connection Reconfiguration/NAS:Attach Accept message (S7).

Next, the eNB 40 transmits an Initial Context Setup Response message to the MME 60 as a response message to the Initial Context Setup Request message (S8). Next, the UE 50 transmits a Direct Transfer/NAS:Attach Complete message to the eNB 40 in order to notify the eNB 40 that the process relating to the Attach Request has been completed (S9). Next, the eNB 40 transmits a NAS:Attach Complete message to the MME 60 (S10).

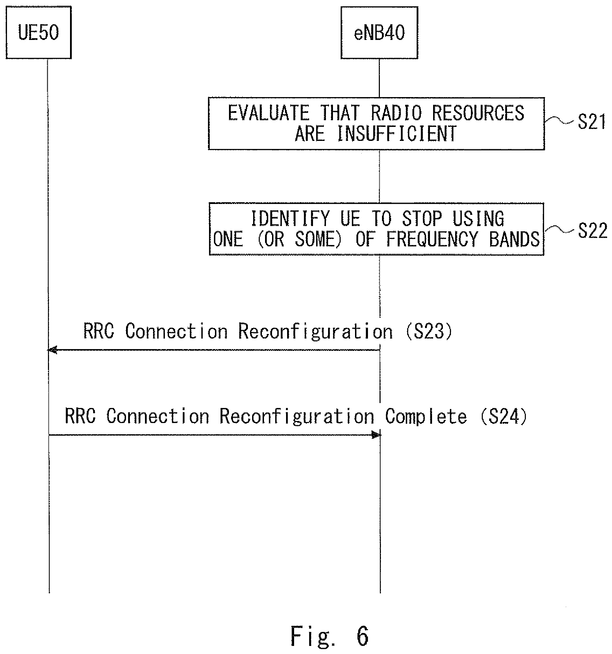

Hereinafter, a flow of processing for stopping the use of one (or some) of the frequency bands for the UE 50 performing carrier aggregation according to the second embodiment of the present disclosure will be described with reference to Fig. 6. In Fig. 6, it is assumed that the UE 50 has already executed the Attach processing of Fig. 5 and is in communication using carrier aggregation.

Firstly, the eNB 40 evaluates that the allocable radio resources are insufficient (S21). For example, the eNB 40 may evaluate that the number of allocable radio channels is insufficient.

Next, the eNB 40 identifies a UE that stops using one (or some) of the frequency bands from among the plurality of UEs performing carrier aggregation, that is, identifies a UE that stops carrier aggregation (S22). For example, the eNB 40 may cause a UE that is performing communication using a signal having a radio field strength lower than a predetermined threshold to stop carrier aggregation. Alternatively, the eNB 40 may check the priority information set for each UE and cause the UEs to stop carrier aggregation in an order from the UE having the lowest priority. Further, in the Attach processing, the eNB 40 identifies the UE that stops carrier aggregation from among the UEs that have been notified about the information indicating a stop of using one (or some) of the frequency bands.

Next, the eNB 40 transmits an RRC Connection Reconfiguration message to the UE identified in Step S22 and causes the identified UE to stop carrier aggregation (S23). For example, the eNB 40 may set a disconnection of a connection in the secondary cell in the RRC Connection Reconfiguration message.

Next, the UE 50 transmits the RRC Connection Reconfiguration Complete message to the eNB 40 (S24). When the UE 50 transmits the RRC Connection Reconfiguration Complete message to the eNB 40, the communication using carrier aggregation between the UE 50 and the eNB 40 is stopped.

As described above, by executing the communication system according to the second embodiment of the present disclosure, when the radio resources are insufficient in the eNB 40 or when the radio resources are expected to become insufficient in the eNB 40, the MME 60 can transmit a message indicating a stop of carrier aggregation. Moreover, when it is evaluated that the radio resources are insufficient or when it is evaluated that the radio resources are expected to become insufficient, the eNB 40 can stop applying carrier aggregation to the communication with the identified UE. In this way, it is possible to solve the problem of the shortage of the radio resources in the eNB 40. Accordingly, the eNB 40 can allocate the radio resources to a UE requesting a new connection to the eNB 40.

Moreover, by obtaining the determination reference information from the MME 60, the eNB 40 can determine a UE to stop carrier aggregation in accordance with the determination reference information from among the plurality of UEs performing carrier aggregation. For example, if a communication carrier determines the determination reference information, the eNB 40 can determine a UE to stop carrier aggregation in accordance with the policy of the communication carrier.

### Third Embodiment

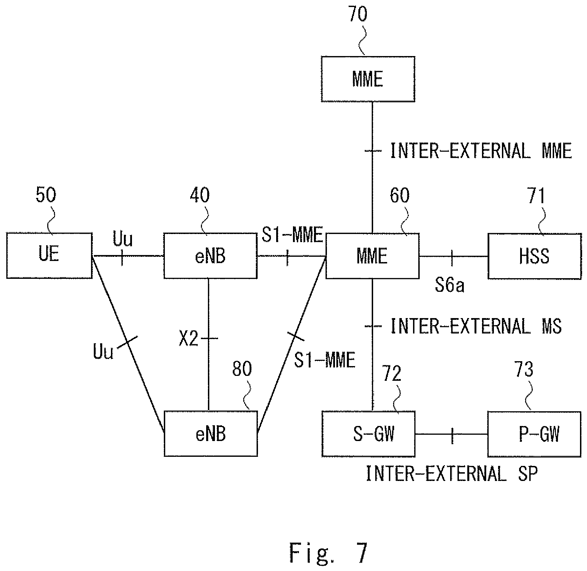

Hereinafter, a configuration example of a communication system according to a third embodiment will be described with reference to Fig. 7. The communication system of Fig. 7 further includes an eNB 80 in the configuration of the communication system of Fig. 2. The eNB 80 is accommodated in the MME 60. The eNB 80 is connected to the eNB 40 via an X2 interface.

In this case, it is assumed that the UE 50 is performing carrier aggregation by simultaneously communicating with the eNB 40 and the eNB 80. For example, the UE 50 may perform communication with the eNB 40 using an 800 MHz band and perform communication with the eNB 80 using a 2 GHz band. Further, when the UE 50 performs carrier aggregation, a communication area formed by the eNB 40 may be used as a primary cell and a communication area formed by the eNB 80 may be used as a secondary cell.

When the UE 50 performs carrier aggregation, the eNB 40 and the eNB 80 may determine which one of the communication areas formed by the eNBs 40 and 80 is used as the primary cell or the secondary cell by transmitting and receiving control signals via the X2 interface.

In such a case, for example, the MME 60 may transmit, to the eNBs 40 and 80, the instruction message instructing the eNBs 40 and 80 to disconnect a connection in the secondary cell when the allocable radio resources become insufficient.

In this case, as the eNB 80 forms the secondary cell, the eNB 80 may disconnect the communication with the UE 50 when it is evaluated that the allocable radio resources are insufficient in the eNB 80.

As described above, by using the communication system according to the third embodiment, even when the UE 50 is performing carrier aggregation using a plurality of eNBs, one (or some) of eNBs among the plurality of eNBs can stop communication with the UE 50. Accordingly, it is possible to stop communication in one (or some) of the frequency bands among the plurality of frequency bands used by the UE 50.

In the above embodiments, the present disclosure has been described as a hardware configuration, but the present disclosure is not limited to this. The present disclosure can be implemented by causing a CPU (Central Processing Unit) to execute a computer program that performs processing of the UE, the MME, and the eNB.

In the above example, the program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

Note that the present disclosure is not limited to the above embodiments, and modifications can be made as appropriate without departing from the scope thereof.

Although the present disclosure has been described with reference to the embodiments, the present disclosure is not limited by the above. Various modifications and changes, understood by those skilled in the art within the scope of the present disclosure, can be made to the configurations and details of the present disclosure.

The present application is based upon and claims the benefit of priority from Japanese Patent Application No. 2015-058151, filed on March 20, 2015, the entire contents of which are hereby incorporated by reference.

### Reference Signs List

- 10: NETWORK APPARATUS
- 11: COMMUNICATION UNIT
- 20: COMMUNICATION TERMINAL
- 30: BASE STATION
- 40: eNB
- 41: COMMUNICATION UNIT
- 42: CONTROL UNIT
- 43: EVALUATION UNIT
- 50: UE
- 60: MME
- 61: SIGNAL GENERATION UNIT
- 62: COMMUNICATION UNIT
- 70: MME
- 71: HSS
- 72: S-GW
- 73: P-GW
- 80: eNB

## Claims

1. A network apparatus for managing a base station that allocates radio resources to a communication terminal and performs communication, the network apparatus comprising communication means for transmitting, to the base station, an instruction message when allocable radio resources are insufficient in the base station or the allocable radio resources are expected to become insufficient in the base station, the instruction message instructing the base station to stop using some of frequency bands for the communication terminal performing communication using a plurality of frequency bands simultaneously.

2. The network apparatus according to Claim 1, wherein when there are a plurality of communication terminals performing communication using a plurality of frequency bands simultaneously, the communication means transmits, to the base station, the instruction message including determination reference information on the communication terminal that is to stop using the some of the frequency bands.

3. The network apparatus according to Claim 2, wherein the determination reference information indicates that the some of the frequency bands are stopped from being used in an order from the communication terminal having a lowest radio field strength.

4. The network apparatus according to Claim 2 or 3, wherein the determination reference information indicates that the one some of the frequency bands are to be stopped from being used in an order from the communication terminal using a modulation scheme providing a lowest communication capacity.

5. The network apparatus according to any one of Claims 1 to 4, wherein the communication means transmits the instruction message to the base station in Attach processing of the communication terminal.

6. The network apparatus according to Claim 5, wherein when the communication terminal executing the Attach processing is performing the communication using the plurality of frequency bands simultaneously, the communication means receives, from a subscriber information management apparatus, information indicating whether or not the communication terminal corresponds to the communication terminal that is to stop using the one some of the frequency bands.

7. The network apparatus according to any one of Claims 1 to 6, wherein a case when the radio resources are insufficient is when the allocable radio resources fall below a first threshold.

8. The network apparatus according to any one of Claims 1 to 7, wherein a case when the radio resources are expected to become insufficient is when an amount of decrease in the allocable radio resources exceeds a predetermined second threshold within a predetermined period.

9. A base station comprising:
communication means for receiving, from a network apparatus, an instruction message when allocable radio resources are insufficient or the allocable radio resources are expected to become insufficient, the instruction message indicating a stop of using some of frequency bands for a communication terminal performing communication using a plurality of frequency bands simultaneously;
an evaluation unit configured to evaluate as to whether or not the allocable radio resources are insufficient or whether or not the allocable radio resources are expected to become insufficient; and
control means for stopping, when the evaluation unit evaluates that the allocable radio resources are insufficient or the allocable radio resources are expected to become insufficient, the some of the frequency bands for the communication terminal performing the communication using the plurality of frequency bands simultaneously.

10. A communication method performed by a network apparatus for managing a base station that allocates radio resources to a communication terminal and performs communication, the communication method comprising transmitting, to the base station, an instruction message when allocable radio resources are insufficient in the base station or the allocable radio resources are expected to become insufficient in the base station, the instruction message instructing the base station to stop using some of frequency bands for a communication terminal performing communication using a plurality of frequency bands simultaneously.

11. A radio resource control method comprising:
receiving, from a network apparatus, an instruction message when allocable radio resources are insufficient or the allocable radio resources are expected to become insufficient, the instruction message indicating a stop of using some of frequency bands for a communication terminal performing communication using a plurality of frequency bands simultaneously;
evaluating as to whether or not the allocable radio resources are insufficient or whether or not the allocable radio resources are expected to become insufficient; and
stopping, when it is evaluated that the allocable radio resources are insufficient or the allocable radio resources are expected to become insufficient, using the some of the frequency bands for the communication terminal performing the communication using the plurality of frequency bands simultaneously.

12. A non-transitory computer readable medium storing a program for causing a computer for managing a base station that allocates radio resources to a communication terminal and performs communication to execute a program, the program comprising transmitting, to the base station, an instruction message when allocable radio resources are insufficient in the base station or the allocable radio resources are expected to become insufficient in the base station, the instruction message instructing the base station to stop using some of frequency bands for a communication terminal performing communication using a plurality of frequency bands simultaneously.

13. A non-transitory computer readable medium storing a program for causing a computer to execute a program, the program comprising:
receiving, from a network apparatus, an instruction message when allocable radio resources are insufficient or the allocable radio resources are expected to become insufficient, the instruction message indicating a stop of using some of frequency bands for a communication terminal performing communication using a plurality of frequency bands simultaneously;
evaluating as to whether or not the allocable radio resources are insufficient or whether or not the allocable radio resources are expected to become insufficient; and
stopping, when it is evaluated that the allocable radio resources are insufficient or the allocable radio resources are expected to become insufficient, the some of the frequency bands for the communication terminal performing the communication using the plurality of frequency bands simultaneously.
